# EUROPÄISCHE PATENTSCHRIFT

(11) **EP 2 508 298 B1**
(45) Veröffentlichungstag und Bekanntmachung des Hinweises auf die Patenterteilung: **16.10.2013**
(21) Anmeldenummer: 11160986.3
(22) Anmeldetag: 04.04.2011
(51) Int. Cl.: B23Q 1/76

(54) **Halte- und Antriebsvorrichtung für ein Rohrunterstützungselement**
Holding and drive device for a tube support element
Dispositif de support et d'entraînement pour un élément de soutien de tuyau

(43) Veröffentlichungstag der Anmeldung: 10.10.2012
(73) Patentinhaber: TRUMPF Werkzeugmaschinen GmbH + Co. KG, 71254 Ditzingen (DE)
(72) Erfinder: Haug, Thomas, 72519, Veringenstadt (DE)
(74) Vertreter: Kohler Schmid Möbus

(56) Entgegenhaltungen:
- EP-A1- 2 017 023
- DE-A1- 4 203 931

## Beschreibung

Die vorliegende Erfindung betrifft eine Rohrunterstützungseinrichtung, gemäß dem Oberbegriff des Anspruchs 1, wie aus der EP 2017023B1 bekannt.

Unter einem Rohr wird im Rahmen dieser Anmeldung ein länglicher Körper (ein längliches Werkstück) verstanden, dessen Länge in der Regel wesentlich größer als sein Querschnitt ist und der aus einem im Wesentlichen unflexiblen Material gefertigt ist. Rohre können eine beliebige offene oder geschlossene Querschnittsform aufweisen, wobei Rund- und Rechteckrohre die gebräuchlichsten Rohre darstellen. Des Weiteren schließt der Begriff "Rohr" auch gewalzte Profile ein, z.B. L, T, oder U-Profile. Rohrförmige Bauteile, die aus Rohren durch Laserschneiden hergestellt werden, werden im Rahmen dieser Anmeldung als Rohrteile bezeichnet.

Bei der Bearbeitung von langen Werkstücken (Rohren) in Rohrbearbeitungsmaschinen muss das in einer Dreh- und Vorschubeinrichtung eingespannte Rohr während der Bearbeitung, d.h. während der Dreh- und Vorschubbewegung, an mehreren Positionen entlang seiner Drehachse abgestützt werden, um eine Durchbiegung des Rohrs zu verhindern. Um eine solche Unterstützung zu erreichen, ist es bekannt, Unterstützungselemente einzusetzen, die eine Auflage für das Rohr aufweisen, an deren Wandung das Rohr in radialer Richtung abgestützt ist.

Da an Rohrbearbeitungsmaschinen typischer Weise Rohre mit stark unterschiedlichen Durchmessern sowie mit unterschiedlichen Querschnittsformen (rund, eckig, etc.) bearbeitet werden, wurde in der EP2017023B1 oder der MI2005A001693 vorgeschlagen, drehbare rollenförmige Unterstützungselemente zu verwenden, bei denen die Werkstückauflage entlang des Außenumfangs der Rolle verläuft und sich der radiale Abstand der Werkstückauflage von der Rollendrehachse in Umfangsrichtung verändert.

Das in der EP2017023B1 beschriebene Unterstützungselement steht mit einem gesteuerten motorischen Antrieb in Verbindung, um das Unterstützungselement in unterschiedlichen Winkellagen zustellen zu können. Der motorische Antrieb weist eine Kopplung sowie eine biegsame Welle auf, die mit einem Antriebsmotor in Verbindung steht. Das Unterstützungselement weist ein Schneckenrad auf, das Drehbewegungen eines antriebsseitigen Getrieberads in Stellbewegungen des Unterstützungselements um seine Drehachse umsetzt.

### Aufgabe der Erfindung

Es ist die Aufgabe der vorliegenden Erfindung, die Flexibilität beim Unterstützen langer rohrförmiger Werkstücke mit stark unterschiedlichem Durchmesser zu erhöhen und insbesondere einen schnellen Wechsel von Rohrunterstützungselementen vornehmen zu können.

### Gegenstand der Erfindung

Diese Aufgabe wird gelöst durch eine Rohrunterstützungseinrichtung mit einer Halte- und Antriebsvorrichtung für ein Unterstützungselement zur Unterstützung eines Rohres, umfassend: eine Halbschale zur Lagerung eines freien Endes einer Welle des Unterstützungselements, eine Verriegelungseinrichtung zur Lagefixierung der Welle des Unterstützungselements in der Halbschale, einen Drehantrieb mit einer Antriebswelle, sowie eine Kreuzscheibenkupplung mit einer Ausgleichsscheibe, die zur Verbindung mit der Welle des Unterstützungselements an einer ersten Seite und zur Verbindung mit der Antriebswelle an einer zweiten, gegenüberliegenden Seite ausgebildet ist.

Die erfindungsgemäße Vorrichtung nimmt ein freies Ende der Welle des Unterstützungselements in einer Halbschale auf. Diese Halbschale wird mit Hilfe eines Riegels so verriegelt, dass die Lage der Welle in radialer Richtung fixiert ist. Als Riegel kann beispielsweise ein schwenkbarer Hebel dienen, welcher in seiner verriegelten Stellung das in der Halbschale gelagerte freie Ende der Welle übergreift, so dass dieses in der Halbschale in radialer Richtung fixiert ist. An Stelle eines verschwenkbaren Hebels können selbstverständlich auch andere Verriegelungseinrichtungen zum Einsatz kommen, weiche typischer Weise manuell geöffnet und gelöst werden können (beispielsweise durch eine Linearbewegung) und welche das freie Ende der Achse in der verriegelten Stellung in radialer Richtung fixieren. Die axiale Führung des Unterstützungselements erfolgt durch die seitlichen Flächen der Halbschalen oder ggf. durch eine zwischen der Halbschale und dem Unterstützungselement angeordnete Zwischenscheibe zur Reduzierung des axialen Spiels. Durch Öffnen des Riegels kann die getriebene Welle des Unterstützungselements ohne Verwendung eines Werkzeugs eingesetzt und entnommen werden.

Die Verbindung der getriebenen Welle des Unterstützungselements mit der Antriebswelle eines Drehantriebs erfolgt mit Hilfe einer an sich z.B. aus der DE4203931C2 oder der DE102008021109B3 bekannten Kreuzscheibenkupplung. Die erfindungsgemäße Halte- und Antriebsvorrichtung ermöglicht einen einfachen und schnellen Austausch des Unterstützungselements, um unterschiedliche an das jeweils zu unterstützende Rohr oder Rohrprofil angepasste Unterstützungselemente verwenden zu können.

In einer Ausführungsform weist die Ausgleichsscheibe an ihren beiden Seiten zwei kreuzweise angeordnete Nuten auf, von denen die erste, dem Drehantrieb abgewandte Nut zum Einschieben einer ersten Leiste ausgebildet ist, die am freien Ende der Welle des Unterstützungselements angebracht ist, und wobei die Antriebswelle an ihrem freien Ende eine zweite Leiste aufweist, die in die zweite, dem Drehantrieb zugewandte Nut der Ausgleichsscheibe einschiebbar ist. Die zweite Leiste wird vorzugsweise so mit der Ausgleichsscheibe verschraubt, dass sie relativ zur Ausgleichsscheibe eine radiale, jedoch keine axiale Bewegung ausführen kann. Die Ausgleichscheibe wird dann von der Welle gehalten. Jede der beiden Leisten ist in der zugehörigen Nut der Ausgleichsscheibe radial beweglich, so dass die Ausgleichsscheibe zwischen den zwei kreuzförmig angeordneten Leisten einen Achsversatz der Wellen durch eine Taumelbewegung ausgleichen kann, um auch bei einem Achsversatz das Drehmoment von der Antriebswelle auf die getriebene Welle des Unterstützungselements übertragen zu können. Somit ist keine genaue Zuordnung zwischen der Antriebswelle und der Welle des Unterstützungselements nötig. Sowohl die Leiste der Antriebswelle des Drehantriebs als auch die Leiste an der Welle des Unterstützungselements ist zu diesem Zweck genau gearbeitet, beispielsweise mit einer Toleranz von ca. 0,04 mm.

Vorteilhafter Weise ist die Halbschale aus Metall oder aus Kunststoff gebildet. Diese Materialien haben sich für die Lagerung der Welle in der Praxis bewährt. Als Material für die Ausgleichsscheibe hat sich verschleißfester bzw. verschleißarmer Kunststoff als vorteilhaft herausgestellt.

In einer Ausführungsform ist an einem Ende der ersten Nut eine Sperre, insbesondere ein Fixierstift, angebracht, um eine lagerichtige Aufnahme der Welle des Unterstützungselements in der Halte- und Antriebsvorrichtung sicherzustellen. Die Sperre verläuft durch die Nut hindurch, so dass an dem Ende der Nut, an dem die Sperre bzw. der Fixierstift angebracht ist, ein Einsetzen der an der Welle des Unterstützungselements angebrachten Leiste verhindert wird. Daher kann die Leiste nur vom der Sperre entgegen gesetzten Ende der Nut eingeschoben werden. Beim Vorsehen einer Sperre in der Form eines Fixierstifts ist an dem Unterstützungselement typischer Weise eine korrespondierende Aussparung vorgesehen. Nur wenn die Leiste mit dem Ende, welches die Aussparung aufweist, voraus in die Nut eingeschoben wird, kann die Nut die Leiste vollständig aufnehmen, so dass das Unterstützungselement von der Halbschale aufgenommen und dort mit Hilfe der Verriegelung fixiert werden kann.

In einer Ausführungsform umfaßt das Unterstützungselement für ein Rohr in einer Rohrbearbeitungsmaschine eine Welle, an deren freiem Ende eine Leiste angebracht ist, die zum Einschieben in eine Nut an einer Ausgleichsscheibe eines Kreuzgetriebes der oben beschriebenen Halte- und Antriebsvorrichtung ausgebildet ist.

In einer Ausführungsform weist die Leiste an einem Ende eine Aussparung zum Eingriff für eine in der Nut angebrachte Sperre, insbesondere einen Fixierstift, auf. Die Aussparung ist an die Form der Sperre bzw. des Fixierstifts, genauer gesagt an dessen Querschnittsgeometrie angepasst. Weist der Fixierstift einen runden Querschnitt auf, ist die Aussparung beispielsweise halbkreisförmig ausgebildet.

Die Rohrunterstützungseinrichtung ist besonders flexibel, da das Unterstützungselement schnell und mit geringem Aufwand ausgetauscht werden kann. Es versteht sich, dass die Rohrunterstützungseinrichtung typischer Weise zusätzlich eine weitere Halbschale zur Aufnahme des anderen freien Endes der Welle des Unterstützungselements aufweist. An der weiteren Halbschale ist typischer Weise eine weitere Verriegelungseinrichtung zur Lagefixierung des Unterstützungselements vorgesehen.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer Rohrbearbeitungsanlage mit mehreren Rohrunterstützungseinrichtungen,
- Fig. 2: eine schematische Darstellung einer Rohrunterstützungseinrichtung mit einer Halte- und Antriebsvorrichtung und einem Unterstützungselement,
- Fig. 3: eine schematische Darstellung des Unterstützungselements beim Einsetzen in eine Ausgleichsscheibe der Halte- und Antriebsvorrichtung, und
- Fig. 4: eine schematische Darstellung des Unterstützungselements während einer Drehbewegung mit Achsversatz.

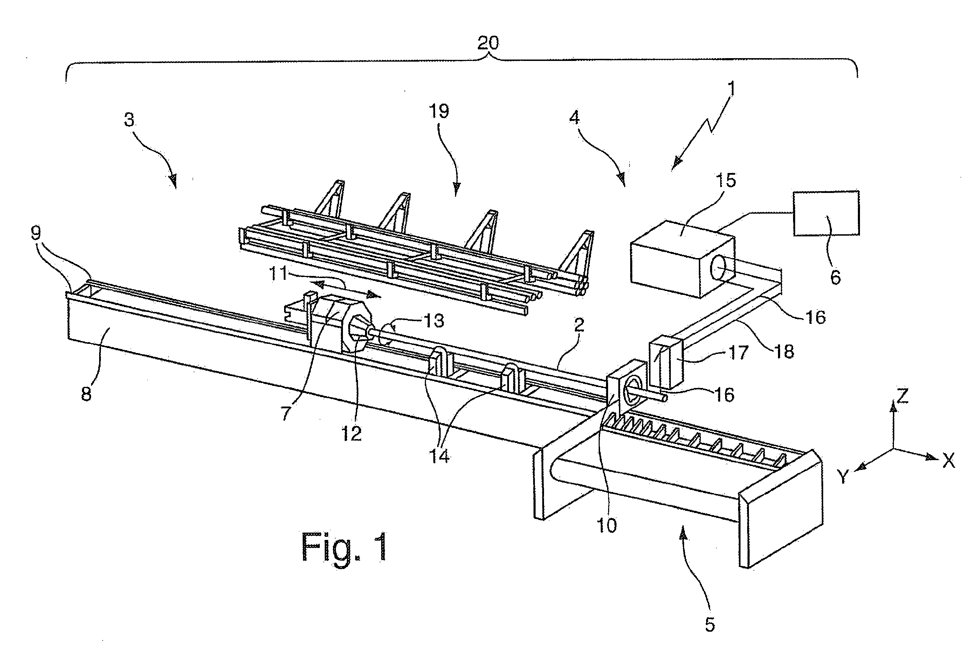

**Fig.1** zeigt eine als "TruLaser Tube" bekannte Bearbeitungsanlage **1** zum Laserschneiden von Rohren **2**, die als Laserschneidanlage bezeichnet wird und zur Bearbeitung von Rohren mit einer beliebigen Querschnittsform ausgebildet ist. Die gezeigte Laserschneidanlage 1 umfasst eine Zuführvorrichtung **3** zur seitlichen Zufuhr eines zu schneidenden Rohrs 2 zu der Laserschneidanlage 1, eine Bearbeitungsvorrichtung **4** zum Laserschneiden von Rohrteilen aus dem Rohr 2 und eine Entladevorrichtung **5** zum Entladen der geschnittenen Rohrteile aus der Laserschneidanlage 1. Alle wesentlichen Funktionen der Laserschneidanlage 1 werden mittels einer numerischen Steuerungsvorrichtung **6** gesteuert.

Die Zuführvorrichtung 3 umfasst eine als Werkstück-Bewegungseinrichtung dienende Dreh- und Vorschubeinrichtung **7** sowie ein Maschinenbett **8** mit Führungsschienen **9** und eine Durchschiebeeinrichtung **10.** Die Dreh- und Vorschubeinrichtung 7 ist motorisch angetrieben in Vorschubrichtung **11** auf den Führungsschienen 9 verfahrbar. An der einem zuzuführenden Rohr 2 zugewandten Seite weist die Dreh- und Vorschubeinrichtung 7 eine Spanneinrichtung **12** auf, die in Richtung des Doppelpfeils **13** gesteuert drehbar ist und das zugeführte Rohr 2 von außen umfasst und ortsfest klemmt. Das zugeführte Rohr 2 wird von einer in das Maschinenbett 8 integrierten Rohrunterstützungseinrichtungen **14** abgestützt. Im Bereich der Bearbeitungsvorrichtung 4 wird das Rohr 2 durch die Durchschiebeeinrichtung 10 geführt. Die Durchschiebeeinrichtung 10 ist so ausgelegt, dass das eingespannte Rohr 2 in Vorschubrichtung 11 geführt und nicht ortsfest geklemmt ist. Das Rohr 2 ist in der Durchschiebeeinrichtung 10 um die Drehachse 13 drehbar.

Die Bearbeitungsvorrichtung 4 umfasst eine Laserstrahlquelle **15** zum Erzeugen eines Laserstrahls **16**, einen Bearbeitungskopf **17** und eine Strahlführung **18**, die den Laserstrahl 16 von der Laserstrahlquelle 15 zum Bearbeitungskopf 17 führt. Der Laserstrahl 16 tritt aus dem Bearbeitungskopf 17 aus und wird auf die Außenumfangsfläche des eingespannten Rohrs 2 fokussiert. Auf der dem Maschinenbett 8 abgewandten Seite der Durchschiebeeinrichtung 10 ist die Entladevorrichtung 5 vorgesehen, die die aus dem Rohr 2 geschnittenen Rohrteile sowie das Restrohr aus der Laserschneidanlage 1 abführt.

Um die Produktivität der Laserschneidanlage 1 zu erhöhen, weist die in Fig. 1 gezeigte Laserschneidanlage 1 eine Beladevorrichtung **19** als Automatisierungskomponente auf, mit der ein Rohr 2 automatisch in eine Übergabeposition befördert und an die Zuführvorrichtung 3 der Laserschneidanlage 1 übergeben wird. Die maschinelle Anordnung aus Laserschneidanlage 1 und der Beladevorrichtung 19 wird als Fertigungszelle **20** bezeichnet.

Wenn das über die Beladevorrichtung 19 zugeführte Rohr 2 in der Übergabeposition angeordnet ist, befindet sich die Dreh- und Vorschubeinrichtung 7 zunächst in einer bearbeitungskopffernen Ausgangsstellung. Zur Rohrbearbeitung verfährt die Dreh- und Vorschubeinrichtung 7 aus ihrer Position mit geöffneter Spanneinrichtung 12 so weit in Richtung auf das zugeführte Rohr 2 zu, bis das dem Bearbeitungskopf 17 abgewandte Ende des Rohrs 2 innerhalb der Spanneinrichtung 12 zu liegen kommt. Die Spanneinrichtung 12 wird geschlossen und dadurch das Rohr 2 an der Dreh- und Vorschubeinrichtung 7 ortsfest geklemmt. Die Dreh- und Vorschubeinrichtung 7 und das Rohr 2 bewegen sich gemeinsam in Richtung auf den Bearbeitungskopf 17. Dabei läuft das Rohr 2 mit seinem dem Bearbeitungskopf 17 zugewandten Ende zunächst in die Durchschiebeeinrichtung 10 ein und wird in Vorschubrichtung 11 durch die Durchschiebeeinrichtung 10 hindurch bewegt, wobei das Rohr 2 in der Durchschiebeeinrichtung 10 um die Drehachse 13 drehbar ist. Das Rohr 2 wird durch die Verfahrbewegung der Dreh- und Vorschubeinrichtung 7 in Vorschubrichtung 11 gegenüber dem Bearbeitungskopf 17 in die gewünschte Bearbeitungsposition zugestellt.

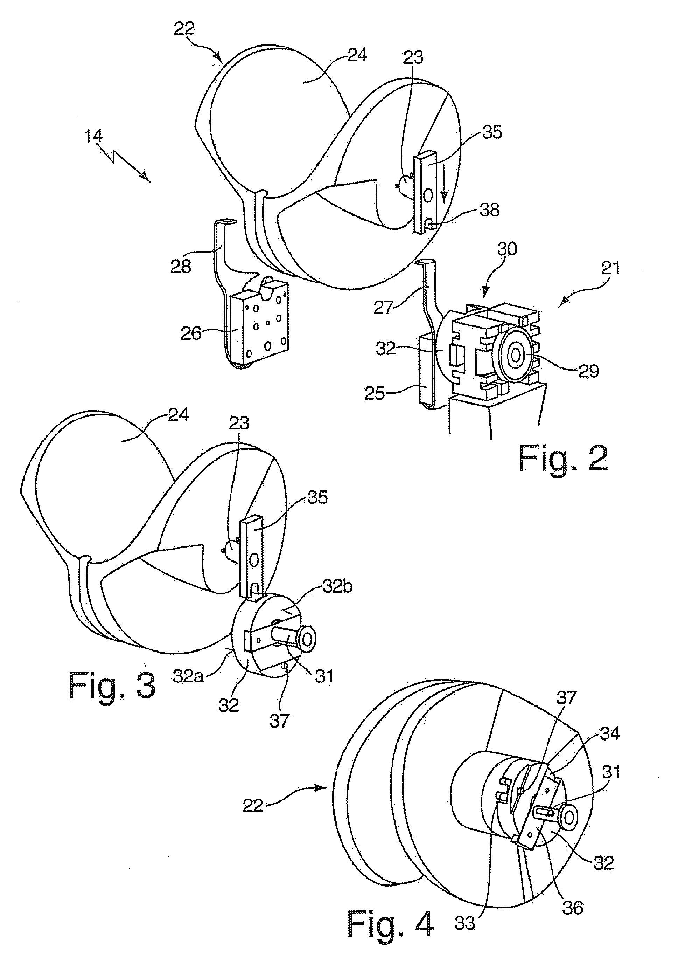

**Fig. 2** zeigt eine der Rohrunterstützungseinrichtungen 14 von Fig. 1 in einer Detailansicht. Die Rohrunterstützungseinrichtung 14 umfasst eine Halte- und Antriebsvorrichtung **21** sowie ein rollenförmiges Unterstützungselement **22** zur Unterstützung des Rohres 2. Das rollenförmige Unterstützungselement 22 ist wie in der EP2017023B1 der Anmelderin beschrieben ausgebildet und weist eine Welle **23** auf, welche eine Drehachse für das Unterstützungselement 22 definiert. Das rollenförmige Unterstützungselement 22 weist am Außenumfang eine Auflage **24** für das Rohr 2 auf, deren radialer Abstand von der Welle 23 in Umfangsrichtung variiert.

Die Halte- und Antriebsvorrichtung 21 für das Unterstützungselement 22 weist eine erste Halbschale **25** auf, die ein freies Ende der Welle 23 des Unterstützungselements 22 aufnimmt und beispielsweise aus Metall oder aus Kunststoff bestehen kann. Ein (nicht gezeigtes) gegenüberliegendes freies Ende der Welle 23 wird in einer weiteren Halbschale **26** aufgenommen, die nicht Teil der Halte- und Antriebsvorrichtung 21 ist. Die Halbschalen 25, 26 werden jeweils mit Hilfe eines an der jeweiligen Halbschale 25, 26 drehbar gelagerten Sperrriegels bzw. -hebels **27**, **28** verriegelt, und zwar indem dieser in eine verriegelte Stellung verschwenkt wird, in welche ein Vorsprung des Riegels 27, 28 die Welle 23 übergreift, so dass die Lage der Welle 23 in radialer Richtung fixiert ist. Die axiale Führung des Unterstützungselements erfolgt durch die seitlichen Flächen der Halbschalen 25, 26 oder durch jeweils eine (nicht gezeigte) zwischen den Halbschale 25, 26 und dem Unterstützungselement 22 angeordnete Zwischenscheibe. Durch Öffnen, d.h. durch Verschwenken des jeweiligen Sperrriegels 27, 28 um eine zur Welle 23 parallele Drehachse kann die Welle 23 des Unterstützungselements 22 ohne die Verwendung eines Werkzeugs aus den Halbschalen 25, 26 entnommen und in diese eingesetzt werden.

Um das Unterstützungselement 22 in unterschiedlichen Winkellage zustellen zu können, weist die Halte- und Antriebsvorrichtung 21 einen Drehantrieb **29** beispielsweise in Form eines Motors mit einem Schneckengetriebe auf, welches mit einer Antriebswelle **31** (vgl. **Fig. 3****)** in Verbindung steht. Zur Übertragung der Drehbewegung bzw. des Drehmoments an die getriebene Welle 23 des Unterstützungselements 22 ist in der Halte- und Antriebsvorrichtung 21 ein Kreuzgetriebe **30** mit einer Ausgleichsscheibe **32** vorgesehen, welche an ihren einander gegenüberliegenden Seiten **32a**, **32b** jeweils eine Nut **33**, **34** mit rechteckigem Querschnitt aufweist, die kreuzförmig zueinander angeordnet sind, wie in Fig. 3 und insbesondere in **Fig. 4** besser zu erkennen ist.

Zum Übertragen des Drehmoments auf die getriebene Welle 23 ist an deren der Halte- und Antriebsvorrichtung 21 zugewandten Ende eine Leiste **35** mit rechteckförmigem Querschnitt angebracht, welche in die dem Unterstützungselement 22 zugewandte Nut 33 der Ausgleichsscheibe 32 eingeschoben werden kann. Eine entsprechende Leiste **36** mit rechteckigem Querschnitt ist auch am freien Ende der Antriebswelle 31 angebracht und in die dem Unterstützungselement 22 abgewandte Nut 34 der Ausgleichsscheibe 32 einsetzbar bzw. eingesetzt. Die in die Nut 34 eingesetzte Leiste 36 wird so mit der Ausgleichsscheibe 32 verschraubt, dass sie relativ zur Ausgleichsscheibe 32 eine radiale, jedoch keine axiale Bewegung ausführen kann. Die Ausgleichscheibe 32 wird also von der Antriebswelle 31 gehalten.

Jede der beiden Leisten 35, 36 ist in der zugehörigen Nut 33, 34 der Ausgleichsscheibe 32 radial beweglich angeordnet, so dass die Ausgleichsscheibe 32 zwischen den zwei kreuzförmig angeordneten Leisten 35, 36 bei der Übertragung des Drehmoments eine Taumelbewegung ausführt, wenn die getriebene Welle 23 und die Antriebswelle 31 einen Achsversatz aufweisen. Zu diesem Zweck ist sowohl die Leiste 36 der Antriebswelle 31 des Drehantriebs 29 als auch die Leiste 35 an der Welle 23 des Unterstützungselements 22 genau gearbeitet (Toleranz z.B. ca. 0,04 mm).

Bei der Drehung des Unterstützungselements 22 mit Hilfe des Drehantriebs 29 bewegen sich die Leisten 35, 36 der beiden Wellen 23, 31 in den Nuten 33, 34 der Ausgleichsscheibe 32 hin und her, so dass der Achsversatz zwischen den Wellen 23, 31 ausgeglichen wird. Ein Winkelausgleich ist durch eine Verformung der Ausgleichsscheibe 32 ebenfalls möglich, wenn die Ausgleichsscheibe 32 wie im vorliegenden Beispiel aus einem elastischen Material, z.B. aus verschleißarmem Kunststoff, besteht. Die Drehmomentübertragung erfolgt hierbei mit geringem Spiel.

Um ein lagerichtiges Einsetzen des Unterstützungselements 22 in die Halte- und Antriebsvorrichtung 21 zu ermöglichen, ist an einem Ende der dem Unterstützungselement 22 zugewandten Nut 33 der Ausgleichsscheibe 32 ein in Fig. 3 und Fig. 4 gezeigter, runder Fixierstift **37** angebracht, der parallel zur Antriebswelle 31 durch die Nut 33 hindurch verläuft. Die mit der Welle 23 des Unterstützungselements 22 verbundene Leiste 35 weist an einem Ende eine in der Größe an den Fixierstift 37 angepasste halbkreisförmige Aussparung **38** auf. Bei lagerichtigem Einsetzen der Leiste 35 des Unterstützungselements 22 in die Nut 33 greift der Fixierstift 37 in die Aussparung 38 ein. Wird versucht, die Leiste 35 der getriebenen Welle 23 mit dem der Aussparung 38 gegenüber liegenden Ende in die Nut 33 einzuführen, stößt die Leiste 35 auf den Fixierstift 37 und das Unterstützungselement 22 kann nicht an der Halbschale 25 festgelegt werden. Somit ist sichergestellt, dass die Drehlage des Unterstützungselements 22 beim Einsetzen feststeht, so dass dieses stets lagerichtig in die Halte- und Antriebsvorrichtung 21 eingesetzt wird, und zwar auf die nachfolgend beschriebene Weise:
Die Welle 23 des Unterstützungselements 22 wird von oben in die Halbschalen 25, 26 eingesetzt (vgl. Pfeil in Fig. 2). Um das Unterstützungselement 22 zu entnehmen bzw. zu wechseln, ist es erforderlich, in einem ersten Schritt das Unterstützungselement 22 so zu drehen, dass die an der Welle 23 des Unterstützungselements 22 angebrachte Leiste 35 senkrecht steht und sich der Fixierstift 37 in der Nut 33 am nach unten weisenden Rand der Ausgleichsscheibe 32 befindet (vgl. Fig. 3). Danach werden die Sperrriegel 27, 28 geöffnet und die getriebene Welle 23 kann in radialer Richtung aus den Halbschalen 26, 27 entnommen werden. Das Wiedereinsetzen der getriebenen Welle 23 erfolgt in umgekehrter Reihenfolge. Wie oben dargestellt kann hierbei ein um 180° verdrehtes Einsetzen des Unterstützungselements 22 durch den Fixierstift 37 verhindert werden.

Es versteht sich, dass an Stelle eines Fixierstifts auch eine andere Art der Sperre an der Nut 33 der Ausgleichsscheibe 32 vorgesehen werden kann. Beispielsweise muss die Nut 33 nicht zwingend durchgehend ausgebildet werden, sondern kann an einem Ende in einer geeignet geformten, als Sperre dienenden Anschlagfläche münden, an der ein korrespondierend geformtes Ende der Leiste 3 in Anlage gebracht wird.

Durch die oben beschriebene Rohrunterstützungseinrichtung 14 wird ein schneller Wechsel zwischen unterschiedlichen Unterstützungselementen ermöglicht, da diese mit geringem Aufwand in die Halte- und Antriebsvorrichtung 21 eingesetzt und wieder aus dieser entnommen werden können. Der Maschinenanwender kann daher für verschiedene zu bearbeitende Rohrprofile bzw. Rohrdurchmesser spezifische Unterstützungselemente verwenden, ohne dass hierbei zu große Rüstzeiten anfallen.

## Patentansprüche

1. Rohrunterstützungseinrichtung (14), umfassend:
ein Unterstützungselement (22) zur Unterstützung eines Rohres (2) in einer Rohrbearbeitungsmaschine (1), wobei das Unterstützungselement (22) eine Welle (23) aufweist, sowie
eine Halte- und Antriebsvorrichtung (21) für das Unterstützungselement (22),
**dadurch gekennzeichnet,**
**dass** die Halte- und Antriebsvorrichtung (21) umfasst:
eine Halbschale (25) zur Lagerung eines freien Endes der Welle (23) des Unterstützungselements (22),
eine Verriegelungseinrichtung (27) zur Lagefixierung der Welle (23) des Unterstützungselements (22) in der Halbschale (25),
einen Drehantrieb (29) mit einer Antriebswelle (31), sowie
eine Kreuzscheibenkupplung (30) mit einer Ausgleichsscheibe (32), die zur Verbindung mit der Welle (23) des Unterstützungselements (22) an einer ersten Seite (32a) und zur Verbindung mit der Antriebswelle (31) an einer zweiten, gegenüberliegenden Seite (32b) ausgebildet ist.

2. Rohrunterstützungseinrichtung nach Anspruch 1, bei welcher am freiem Ende der Welle (23) des Unterstützungselements (22) eine Leiste (35) angebracht ist, die zum Einschieben in eine Nut (33) an der Ausgleichsscheibe (32) der Halte- und Antriebsvorrichtung (21) ausgebildet ist.

3. Rohrunterstützungseinrichtung nach Anspruch 2, bei welcher die Ausgleichsscheibe (32) an ihren beiden Seiten (32a, 32b) zwei kreuzweise angeordnete Nuten (33, 34) aufweist, von denen die erste, dem Drehantrieb (29) abewandte Nut (33) zum Einschieben der Leiste (35) ausgebildet ist, die am freien Ende der Welle (23) des Unterstützungselements (22) angebracht ist, und wobei die Antriebswelle (31) an ihrem freien Ende eine zweite Leiste (36) aufweist, die in die zweite, die dem Drehantrieb (29) zugewandte Nut (34) der Ausgleichsscheibe (32) einschiebbar ist.

4. Rohrunterstützungseinrichtung nach Anspruch 3, bei welcher die zweite Leiste (36) in die zweite, dem Drehantrieb (29) zugewandte Nut (34) der Ausgleichsscheibe (32) eingeschoben und so mit der Ausgleichsscheibe (32) verbunden ist, dass sie relativ zur Ausgleichsscheibe (32) eine radiale, jedoch keine axiale Bewegung ausführen kann.

5. Rohrunterstützungseinrichtung nach einem der vorhergehenden Ansprüche, bei welcher die Halbschale (25) aus Metall oder aus Kunststoff gebildet ist.

6. Rohrunterstützungseinrichtung nach einem der vorhergehenden Ansprüche, bei welcher die Ausgleichsscheibe (32) aus verschleißfestem Kunststoff besteht.

7. Rohrunterstützungseinrichtung nach einem der Ansprüche 2 bis 6, bei welcher an einem Ende der ersten Nut (33) eine Sperre, insbesondere ein Fixierstift (37), angebracht ist, um eine lagerichtige Aufnahme der Welle (23) des Unterstützungselements (22) in der Halte- und Antriebsvorrichtung (21) sicherzustellen.

8. Rohrunterstützungseinrichtung nach einem der vorhergehenden Ansprüche, bei der die Leiste (35) an einem Ende eine Aussparung (38) zum Eingriff für eine in der Nut (33) angebrachte Sperre, insbesondere einen Fixierstift (37), aufweist.

## Claims

1. Pipe supporting device (14), comprising:
a supporting element (22) for supporting a pipe (2) in a pipe machining tool (1), wherein the supporting element (22) has a shaft (23), and
a holding and drive system (21) for the supporting element (22),
**characterized**
**in that** the holding and drive system (21) comprises:
a half shell (25) for mounting a free end of the shaft (23) of the supporting element (22),
a locking device (27) for fixing the position of the shaft (23) of the supporting element (22) in the half shell (25),
a rotary drive (29) having a drive shaft (31), and
an Oldham coupling (30) having a shim (32) which is configured for connection to the shaft (23) of the supporting element (22) on a first side (32a) and for connection to the drive shaft (31) on a second, opposite side (32b).

2. Pipe supporting device according to Claim 1, in which a strip (35) is fitted at the free end of the shaft (23) of the supporting element (22), said strip (35) being configured for introduction into a groove (33) on the shim (32) of the holding and drive system (21).

3. Pipe supporting device according to Claim 2, in which the shim (32) has two grooves (33, 34) arranged crosswise on its two sides (32a, 32b), of which the first groove (33), facing away from the rotary drive (29), is configured for the introduction of the strip (35) which is fitted at the free end of the shaft (23) of the supporting element (22), and wherein the drive shaft (31) has at its free end a second strip (36) which is introducible into the second groove (34), facing the rotary drive (29), of the shim (32).

4. Pipe supporting device according to Claim 3, in which the second strip (36) is introduced into the second groove (34), facing the rotary drive (29), of the shim (32) and is connected to the shim (32) such that it can execute a radial movement with respect to the shim (32), but not an axial movement.

5. Pipe supporting device according to one of the preceding claims, in which the half shell (25) is formed from metal or from plastics material.

6. Pipe supporting device according to one of the preceding claims, in which the shim (32) consists of wear-resistant plastics material.

7. Pipe supporting device according to one of Claims 2 to 6, in which a detent, in particular a mixing pin (37), is fitted at one end of the first groove (33), in order to ensure that the shaft (23) of the supporting element (22) is held in the correct position in the holding and drive system (21).

8. Pipe supporting device according to one of the preceding claims, in which the strip (35) has at one end an engagement cutout (38) for a detent, in particular a fixing pin (37), fitted in the groove (33).

## Revendications

1. Dispositif de soutien de tuyau (14), comprenant :
un élément de soutien (22) pour soutenir un tuyau (2) dans une machine d'usinage de tuyau (1), l'élément de soutien (22) présentant un arbre (23), et
un dispositif de retenue et d'entraînement (21) pour l'élément de soutien (22),
**caractérisé en ce que**
le dispositif de retenue et d'entraînement (21) comprend :
une demi-coque (25) pour supporter une extrémité libre de l'arbre (23) de l'élément de soutien (22),
un dispositif de verrouillage (27) pour la fixation en position de l'arbre (23) de l'élément de soutien (22) dans la demi-coque (25),
un entraînement en rotation (29) pourvu d'un arbre d'entraînement (31), et
un accouplement à disques entrecroisés (30) muni d'un disque d'équilibrage (32), qui est réalisé pour réaliser la connexion à l'arbre (23) de l'élément de soutien (22) au niveau d'un premier côté (32a) et la connexion à l'arbre d'entraînement (31) au niveau d'un deuxième côté opposé (32b).

2. Dispositif de soutien de tuyau selon la revendication 1, dans lequel, à l'extrémité libre de l'arbre (23) de l'élément de soutien (22), est montée une barrette (35) qui est réalisée de manière à être enfoncée dans une rainure (33) au niveau du disque d'équilibrage (32) du dispositif de retenue et d'entraînement (21).

3. Dispositif de soutien de tuyau selon la revendication 2, dans lequel le disque d'équilibrage (32) présente sur ses deux côtés (32a, 32b) deux rainures disposées en forme de croix (33, 34), dont la première rainure (33) tournée à l'opposé de l'entraînement en rotation (29), est réalisée pour recevoir la barrette (35) qui est montée à l'extrémité libre de l'arbre (23) de l'élément de soutien (22), et l'arbre d'entraînement (31) présentant à son extrémité libre une deuxième barrette (36) qui peut être enfoncée dans la deuxième rainure (34), tournée vers l'entraînement en rotation (29), du disque d'équilibrage (32).

4. Dispositif de soutien de tuyau selon la revendication 3, dans lequel la deuxième barrette (36) est enfoncée dans la deuxième rainure (34), tournée vers l'entraînement en rotation (29), du disque d'équilibrage (32) et est connectée au disque d'équilibrage (32) de telle sorte qu'elle puisse effectuer, par rapport au disque d'équilibrage (32), un mouvement radial mais pas un mouvement axial.

5. Dispositif de soutien de tuyau selon l'une quelconque des revendications précédentes, dans lequel la demi-coque (25) est fabriquée en métal ou en plastique.

6. Dispositif de soutien de tuyau selon l'une quelconque des revendications précédentes, dans lequel le disque d'équilibrage (32) est fabriqué en plastique résistant à l'usure.

7. Dispositif de soutien de tuyau selon l'une quelconque des revendications 2 à 6, dans lequel, à une extrémité de la première rainure (33) est monté un arrêt, en particulier une goupille de fixation (37), afin d'assurer une réception de l'arbre (23) de l'élément de soutien (22) en position correcte dans le dispositif de retenue et d'entraînement (21).

8. Dispositif de soutien de tuyau selon l'une quelconque des revendications précédentes, dans lequel la barrette (35) présente, à une extrémité, un évidement (38) pour l'engagement pour un arrêt, en particulier une goupille de fixation (37), monté(e) sur la rainure (33).
